# EUROPEAN PATENT APPLICATION

(11) **EP 3 872 639 A1**
(43) Date of publication of application: **01.09.2021**
(21) Application number: 20160049.1
(22) Date of filing: 28.02.2020
(51) Int. Cl.: G06F 11/07, G06F 11/30, G06F 11/34, G06F 11/14

(54) **DATA LOGGING DEVICE**

(71) Applicant: Aptiv Technologies Limited, St. Michael (BB)
(72) Inventor: Herzogenrath, Pekka, 42115 Wuppertal (DE); Schrey, Moritz, 42119 Wuppertal (DE); Dittrich, Ralf, 40225 Düsseldorf (DE)
(74) Representative: Manitz Finsterwald Patent- und Rechtsanwaltspartnerschaft mbB

(57) **Abstract**

Disclosed is an Data Logging Device including a computing unit (CU) and a primary storage with at least one non-volatile random-access memory (NVRAM) region, wherein the CU is configured to collect data, at least one ring-buffer is implemented in said NVRAM region, the ring-buffer is configured to store the data, and the CU and the primary storage are connected by a data interface and configured to transfer the data from the CU to the ring-buffer.

## Description

### FIELD

The present disclosure relates to a Data Logging Device comprising a computing unit and a primary storage and a method for operating the same.

### BACKGROUND

In vehicles with ADAS (Advanced Driver Assistant Systems) and particularly upcoming AD (Autonomous Driving) features, data logging becomes an important topic. Driven also by governmental institution regulations, the need for a safe method of persistently storing different kinds of vehicle data such as vehicle telematics data (like for example speed, steering angle, braking), sensor data, object data from an AD/ADAS processing toolchain, driver state and the like arises, so that a "black box" like device, called Event Data Recorder (EDR) or Accident Data Recorder (ADR), might be requested to be built in next generation vehicles. A purpose of storing this data might be to proof that accidents were not caused by an error in the system.

One of the crucial demands for such a storage system is that in case of an accident the data, recorded before, during and shortly after the accident happened - exemplarily 30 seconds before and 15 seconds after - must be stored safely even if the power supply of the data sources and data storage system is lost due to a crash impact during the accident. Additionally, the option for a read-out of the data afterwards must be given.

A known automotive EDR memory typically consists of EEPROM. The benefit of EEPROMs is a high endurance of a few million write cycles. Moreover, EEPROM has very good data retention capabilities in case of power loss of about 10 years, but suffers from low data storage capacities of only a few Megabytes and slow write speed. EEPROM is therefore suited for simple error code storage applications. Its capacity is however by far not big enough to store relevant data for upcoming ADAS EDR applications, where a few Gigabytes of memory might be required to store data before, during and shortly after an accident.

Non-volatile memory (NVM) storage systems which are designed to safely store big amounts of data typically use NAND flash devices in current applications. NAND flash provides a high capacity in the Gigabyte range and write speeds of a few hundred Megabyte per second. Nevertheless, writing AD/ADAS EDR data sequentially on a NAND device would require a few Petabytes of memory which is not available. Incoming data must therefore be stored in a ring-buffer such that old data is continuously being overwritten by new data. However, due to physical constraints NAND flash has a limited endurance of only a few thousand program/erase cycles that limit the data that can be written over the lifetime on a NAND flash device.

Accordingly, there is a need to for an Data Logging Device enabled to collect and store in particular automotive data, which is provided with a high capacity memory, a high write speed and a high endurance.

### SUMMARY

The present disclosure provides a Data Logging Device and a method for operating the Data Logging Device according to the independent claims. Embodiments are given in the subclaims, the description and the drawings.

In one aspect, the present disclosure is directed at a Data Logging Device, in particular for AD (Autonomous Driving) or ADAS (Advanced Driver Assistant Systems) applications for vehicles, including a computing unit (CU) and a primary storage with at least one non-volatile random-access memory (NVRAM) region, wherein the CU is configured to collect data, in particular vehicle data, at least one ring-buffer is implemented in said NVRAM region, the ring-buffer is configured to store the data, and the CU and the primary storage are connected by a data interface, in particular a data line, and configured to transfer the data from the CU to the ring-buffer.

The Data Logging Device can for example be an Event Data Recorder (EDR) or an Accident Data Recorder (ADR). The data can be automotive data like for example vehicle data such as vehicle telematics data (like for example speed, steering angle, braking), sensor data, object data from an AD/ADAS processing toolchain, but also information on a driver state or other data. However, the present disclosure is not limited to the automotive field but can also be applied to other fields such as motorcycles, aerospace and the like.

The Data Logging Device combines a CU and a ring-buffer implemented in an NVRAM region, thus solving the problems of limited storage capabilities with respect to capacity memory, endurance and write speed for upcoming AD/ADAS applications.

The CU is adapted to collect the required data. This can for example be implemented by middleware systems using a publisher - subscriber principle. This can enable the CU to access for example automotive data but also object data which could be published from any point of an automotive data processing chain. This can include any automotive data from perception over object tracking to trajectories planning and automotive data like vehicle telematics data. During operation, the automotive data collected by the CU is transferred via the data interface, in particular a data line physically connecting the CU and the primary storage, from the CU to the primary storage for at least temporal storage.

In order to store the data, the ring-buffer is used. This means that "old" data transferred previously from the CU is continuously being overwritten by "new" data currently incoming from the CU. The ring-buffer can be implemented as a volatile memory region or as a non-volatile memory region. As the endurance of the NVRAM region can be assumed to be infinite, the ring-buffer can be overwritten endlessly. The ring-buffer allows limiting the memory size of the primary storage, thus reducing the costs of the Data Logging Device.

The ring-buffer can be accessed by an operating system running on the CU and can for example be used like a common solid state disk (SSD), enabling a storage of data similar to a storage on a SSD. Using standardized primary channel memory interfaces, the data can be stored with a high write speed. As the number of write cycles on said NVRAM based ring-buffer can be assumed as being rather unlimited, the ring-buffer also is provided with a high endurance.

According to an embodiment, the NVRAM region includes a persistent memory region different from the ring-buffer for persistent storage of a data content of the ring-buffer in case of a trigger event, such that the data content in the ring-buffer at the time of the trigger event can be persistently stored in the primary storage. If the ring-buffer is implemented as a volatile memory region, the data content in the ring-buffer is transferred to the persistent memory region in case of the trigger event. The required energy for this operation can be delivered by a backup energy source which is scaled in a way such that the energy is sufficient for the time needed to transfer the data content in the ring-buffer to the persistent memory region. If the ring-buffer is implemented as a non-volatile memory region, the data content in the ring-buffer is kept at its current location in the NVRAM region. In other words, a section of the NVRAM region implemented as the ring-buffer becomes a part of the persistent memory region. For a further storage of data incoming from the CU, a ring-buffer is implemented in a section of the NVRAM region different from the persistent memory region.

According to an embodiment, the NVRAM region is configured to store multiple persistent images of the ring-buffer. This allows to persistently store data of multiple trigger events. Therefore, the Data Logging Device can still record and store data after a trigger event occurred and has not to be read-out or emptied after each single trigger event. This enhances the user friendliness and reduces the maintenance costs of the Data Logging Device.

According to an embodiment, the trigger event corresponds to an occurrence of deviations in the data or irregularities in the data or specific patterns in the data or other events. The trigger event can for example be a power loss of the Data Logging Device. The trigger event can for example be due an accident causing deviations or irregularities in the data or causing a power loss of the Data Logging Device. The deviations or irregularities in the data can for example also be related to a release of an airbag or an ESC (Electronic Stability Control) system of the vehicle being in use. A trigger event can for example also be related to the occurrence of a hacker attack to an AD/ADAS processing toolchain of a vehicle.

According to an embodiment, the Data Logging Device further includes an interface configured to allow for a read-out of the persistently stored data. The interface can for example be a plug connector. If a read-out is desired, the Data Logging Device can be connected to a data analysis system for accessing the stored data. In this way the data can be fully recovered and a trigger event like for example a power loss of the Data Logging Device is not causing any data loss.

According to an embodiment, the ring-buffer is mounted as a memory drive to the CU. The ring-buffer can be accessed by the operating system running on the CU for example by allocating a certain memory region in the NVRAM, optionally formatting it with a filesystem and mounting said memory region as storage to the CU. Thereby, only a part of the memory of the NVRAM is accessible by the CU as a memory drive for at least temporal storage of the data. The size of the ring-buffer is setup in a way such that it matches the product of a transfer rate of data from the CU to the ring-buffer and a desired recording time around the time of a trigger event.

According to an embodiment, the primary storage including the NVRAM region is an implementation of non-volatile dual inline memory (NVDIMM-N) technology and includes a control unit, a volatile RAM, a non-volatile flash memory and an energy source. Said NVDIMM-N technology is commonly used in high performance computer servers and supercomputers to prevent those systems from data loss in case of a power loss. It provides a combination of a volatile RAM with a non-volatile flash memory connected by a control unit, for example an ASIC or FPGA. Only the volatile RAM might be directly accessible by the CU by using direct addressing. To an operating system of the CU, the volatile RAM unit is transparent and behaves as a common RAM device where the operating system stores the runtime data.

According to an embodiment, the control unit is configured to control the primary storage, at least a part of the volatile RAM memory is configured to store the data transferred from the CU in the ring-buffer, and the non-volatile flash memory is configured to retrieve and store the data stored in the ring-buffer in case of the trigger event. The different components of the NVRAM region can be mounted on a mutual printed circuit board (PCB). The volatile RAM can comprise at least two memory regions, wherein a first memory region is designated to be used as system memory for the CU and a second memory region is designated to be used as ring-buffer for storing the data. In case of a trigger event, the control unit copies the data content in the ring-buffer to the non-volatile flash memory.

The non-volatile flash memory is adapted to persistently store the data stored in the volatile RAM in case of a trigger event. The size of the volatile RAM is setup in a way such that it matches the product of a transfer rate of data from the CU to the primary storage and a desired recording time of data around the time of the trigger event. As the trigger event occurs, a copy of the data stored in the volatile RAM to the non-volatile flash memory of the NVRAM region is initiated to ensure a persistent storage of the data. Copying of the data will start instantaneously as the trigger event occurs. As the data will be stored on the non-volatile flash memory only in case of an occurrence of a trigger event, the number of program/erase cycles on the non-volatile flash memory is low.

According to an embodiment, a memory size of the non-volatile flash memory is equal to or multiple times larger than a memory size of the ring-buffer. For example, the memory size of the non-volatile flash memory can be between 8 and 12 larger than a memory size of the ring-buffer. In other words, the non-volatile flash memory is scaled in a way that it can store multiple copies or images of the data content in the ring-buffer. This allows to persistently store the data of multiple trigger events on the non-volatile flash memory of the primary storage.

According to an embodiment, the NVRAM region is realized with a NVDIMM-P module or a Data Center Persistent Memory Module (DCPMM) or a Ferroelectric Random Access Memory (FeRAM) module or a Magnetoresistive Random Access Memory (MRAM) module or a Phase-change Random Access Memory (PCRAM) module or a Nanotube-based Random Access Memory (NRAM) module or with another memory technology. The NVRAM region can include volatile memory regions and non-volatile memory regions. For example, NVDIMM-P/DCPMM combines the advantages of RAM and flash memory, providing both block addressing and classical RAM byte. NVRAM modules based on NVDIMM-P/DCPMM are commonly used in high performance computer servers and supercomputers to combine the high capacity of non-volatile storage with the low latency capabilities of volatile memories.

According to an embodiment, the primary storage and/or the at least one NVRAM region is a Dual Inline Memory Module (DIMM) or a M.2 module or a Next Generation Form Factor (NGFF) module. Such modules typically have all required components on one module which can be easily extracted from a host, in particular the EDR, to allow for a read-out of the memory device. They can for example be connected via a PCIe (Peripheral Component Interconnect Express) interface to the CU.

In another aspect, the present disclosure is directed at a method for operating a Data Logging Device, comprising the steps of transferring data collected by the CU to the primary storage via the data interface, in particular a data line, and storing the data in the ring-buffer. As the endurance of the NVRAM region can be assumed to be infinite, the ring-buffer can be overwritten endlessly. The ring-buffer can be accessed by the operating system running on the CU and can for example be used like a common solid state disk (SSD), enabling a storage of data similar to a storage on a SSD. Therefore, data can be stored both with a high write speed and a high capacity memory.

According to an embodiment, the method further comprises the step of persistently storing a data content of the ring-buffer in a persistent memory region within the NVRAM region in case of a trigger event, wherein the persistent memory region is different from the ring-buffer.

If the ring-buffer is implemented as a non-volatile memory region, the data content in the ring-buffer is kept at its current location in the NVRAM region. In other words, the NVRAM region of the ring-buffer becomes a part of the persistent memory region. For a further storage of data coming from the CU, a ring-bugger is implemented in a NVRAM region different from the persistent memory region.

If the ring-buffer is implemented as a volatile memory region, the data content in the ring-buffer is transferred to the persistent memory region in case of the trigger event. As the trigger event occurs, a copy of the data stored in the ring-buffer to the persistent memory region is initiated to ensure a persistent storage of the data. Copying of the data will start instantaneously as the trigger event occurs. As the data will be stored in the persistent memory region only in case of an occurrence of a trigger event, the number of program/erase cycles in the persistent memory region is low.

For a read-out of the persistently stored data, the Data Logging Device can be connected to a data analysis system for accessing the stored the data. In this way the data can be fully recovered. Therefore, a trigger event like for example a power loss of the Data Logging Device is not causing any data loss.

According to an embodiment, multiple persistent images of the ring-buffer are stored in said persistent memory region. In this way the Data Logging Device can still record and store data after a trigger event occurred and has not to be read-out or emptied after each single trigger event. The steps of transferring data to the primary storage and storing the data in the ring-buffer therefore can be resumed after the trigger event has terminated.

According to an embodiment, a memory size of the ring-buffer corresponds to a memory size of data collected during a time span of 1 minute or less, corresponding for example to data recorded before, during and shortly after an accident happened.

### DRAWINGS

Exemplary embodiments and functions of the present disclosure are described herein in conjunction with the following drawings, showing schematically in:
Fig. 1 a first embodiment of a Data Logging Device,
Fig. 2 a second embodiment of a Data Logging Device, and
Fig. 3 a third embodiment of a Data Logging Device.

### DETAILED DESCRIPTION

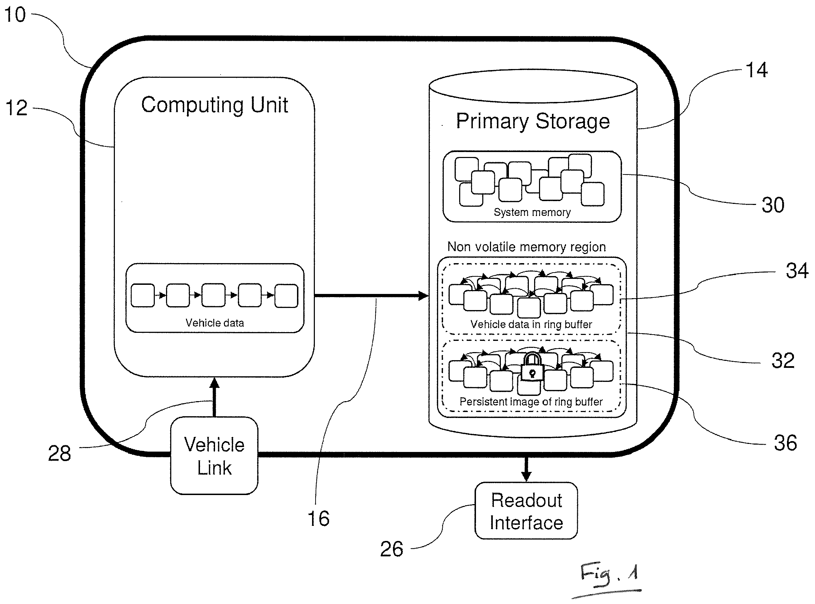

Fig. 1 depicts a first embodiment of an Data Logging Device 10 in a schematic view. The Data Logging Device 10 can persistently store data, in particular automotive data, in case of an event. The data can for example be vehicle data such as vehicle telematics data (like for example speed, steering angle, braking), sensor data, object data from an AD (Autonomous Driving) or ADAS (Advanced Driver Assistant Systems) processing toolchain, but also information on a driver state or other data. In the shown embodiment the data is vehicle data of a not shown vehicle. However, the present disclosure is not limited to the automotive field but can also be applied to other fields such as motorcycles, aerospace and the like.

The Data Logging Device 10 unit comprises a computing unit (CU) 12 and a primary storage 14 with a system memory region 30 and a one non-volatile random-access memory (NVRAM) region 32. The NVRAM region 32 comprises a persistent memory region 36 and a memory region which is implemented as a ring-buffer 34 and which is different from the persistent memory region 36.

The CU 12 collects vehicle data via a data link 28, for example using a publisher - subscriber principle, such that the CU 12 can access the data which is published from any point of an automotive data processing chain.

During operation of the Data Logging Device 10, the vehicle data collected by the CU 12 is transferred from the CU 12 to the primary storage 14 via a data interface 16, in particular a data line physically connecting the CU 12 and the primary storage 14, for at least temporal storage in the ring-buffer 34. This means that "old" data transferred previously from the CU 12 is continuously being overwritten by "new" data currently incoming from the CU 12. As the endurance of the NVRAM region 32 can be assumed to be infinite, the ring-buffer 34 can be overwritten endlessly.

In case of a trigger event, the data content in the ring-buffer 34 is persistently stored in the persistent memory region 36. If the ring-buffer 34 is implemented as a volatile memory region, the data content in the ring-buffer 34 is transferred to the persistent memory region 36 in case of the trigger event. If the ring-buffer 34 is implemented as a non-volatile memory region, the data content in the ring-buffer 34 is kept at its current location in the NVRAM region 32. In other words, a section of the NVRAM region 32 implemented as the ring-buffer 34 becomes a part of the persistent memory region 36. For a further storage of data coming from the CU 12, a ring-buffer 34 is implemented in a section of the NVRAM region 32 different from the persistent memory region 36.

The Data Logging Device 10 further includes an interface 26 configured to allow for a read-out of the persistently stored data. The interface 26 can for example be a plug connector. If a read-out is desired, the Data Logging Device 10 can be connected to a not shown data analysis system for accessing the stored data. In this way the data can be fully recovered and a trigger event like for example a power loss of the Data Logging Device 10 is not causing any data loss.

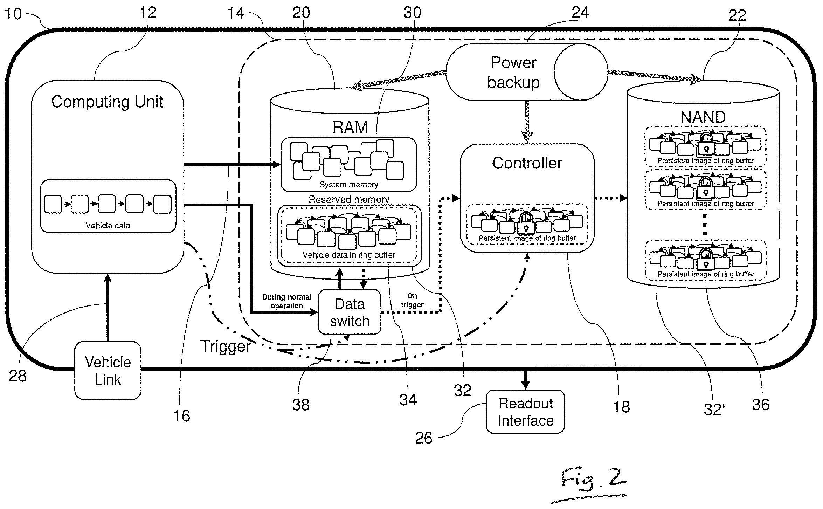

Fig. 2 depicts a second embodiment of a Data Logging Device 10 in a schematic view. The Data Logging Device 10 unit comprises a computing unit (CU) 12 and a primary storage 14 which are connected by a data interface 16, in particular a data line physically connecting the CU 12 and the primary storage 14. The CU 12 collects the vehicle data via a data link 28, for example using a publisher - subscriber principle, such that the CU 12 can access the vehicle data which is published from any point of an automotive data processing chain.

The primary storage 14 in the second embodiment is an implementation of non-volatile dual in-line memory (NVDIMM-N) technology, comprising a NVRAM region 32, 32', a control unit 18 and a backup energy source 24.

The NVRAM region 32, 32' is realized by a volatile RAM memory 20 and a non-volatile NAND flash memory 22. The volatile RAM memory 20 provides a system memory region 30 for hosting an operating system of the CU 12. A further region of the volatile RAM memory 20 is implemented as a ring-buffer 34. This means that "old" data transferred previously from the CU 12 is continuously being overwritten by "new" data currently incoming from the CU 12. The size of the ring-buffer 34 is setup in a way such that it matches the product of a transfer rate of data from the CU 12 to the ring-buffer 34 and a desired recording time around the time of a trigger event. As the endurance of the NVRAM region 32 can be assumed to be infinite, the ring-buffer 34 can be overwritten endlessly.

The implementation of the ring-buffer 34 is purely software based, wherein the ring-buffer 34 can be mounted as a memory drive to the CU 12. The ring-buffer 34 can be accessed by the operating system running on the CU 12 for example by allocating a certain memory region in the NVRAM region 32, optionally formatting it with a filesystem and mounting said memory region as storage to the CU 12. As such, the ring-buffer 34 can be used like a common solid state disk (SSD), enabling a storage of the data in the ring-buffer 34 similar to a storage on a SSD.

During operation of the Data Logging Device 10, the data collected by the CU 12 is transferred from the CU 12 to the primary storage 14 via the data interface 16 for a temporal storage in the ring-buffer 34.

In case of a trigger event, like for example a power loss of the Data Logging Device 10 or an accident of the vehicle, the control unit 18 of the primary storage 14 receives a trigger and instantaneously starts to copy the data which is currently in the ring-buffer 34 into a persistent memory region 36 within the non-volatile NAND flash memory 22. In this way a persistent storage of the data in the persistent memory region 36 is ensured. The required energy for this operation is delivered by the backup energy source 24 which is scaled in a way such that the energy is sufficient for the time needed to copy the data.

The memory size of the ring-buffer 34 is setup in a way such that it matches the product of transfer rate of data from the CU 12 to the primary storage 14 and a desired recording time of data in case of a trigger event. To allow to persistently store the data of multiple trigger events in the NAND flash memory 22, its memory size can be larger, for example between 8 and 12 times larger than the memory size of the ring-buffer 34. This allows to persistently store the data of multiple trigger events on the NAND flash memory 22. As the data will be stored on the NAND flash memory 22 only in case of a trigger event, the number of program/erase cycles on the NAND flash memory 22 is low.

After the trigger event has terminated, storage of data in the ring-buffer 34 can resume. For a read-out of the persistently stored data in the NAND flash memory 22, the Data Collecting Device 10 can be connected to a not shown data analysis system via the read-out interface 26. The data analysis system can mount the persistent memory region 36 of the NAND flash memory 22 and access the data. As the NAND flash memory 22 is non-volatile, the data is fully recovered. Therefore, a trigger event like for example a power loss of the Data Logging Device 10 is not causing any data loss.

By combining a CU 12 with a primary storage 14 including a NVRAM region 32, 32', the Data Logging Device 10 allows collecting and storing data with a high capacity memory, a high write speed and a high endurance.

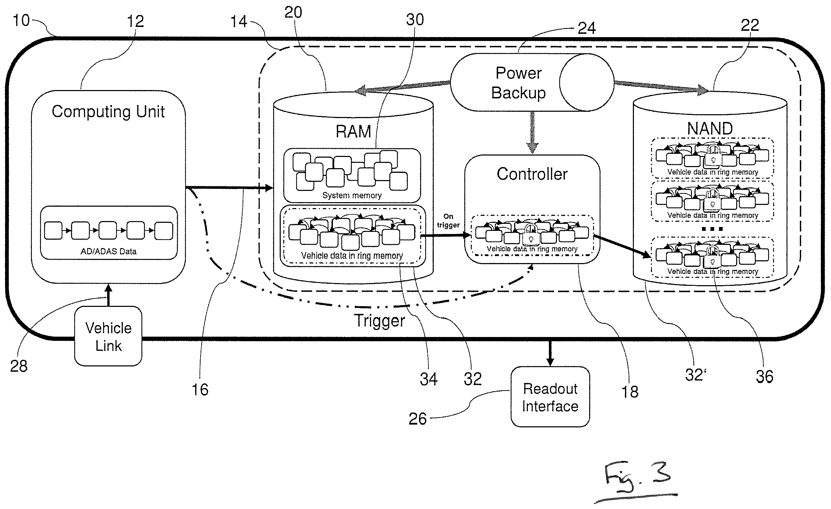

Fig. 3 depicts a third embodiment of an EDR 10 in a schematic view. The third embodiment differs from the embodiment of Fig. 2 in that the Data Logging Device 10 comprises a data switch 38, for example a multiplex (MUX) switch, which is connected to the CU 12 and the control unit 18. The operating mode of the Data Logging Device 10 of the third embodiment is the same as the operating mode of the Data Logging Device 10 of the second embodiment. During normal operation, that is, in absence of a trigger event, the data switch 38 allows data from the CU 12 to be stored in the ring-buffer 34. As a trigger event occurs, the data switch 38 receives a trigger to allow the data in the ring-buffer to be transferred to a persistent memory region 36 within the non-volatile NAND flash memory unit 22 for a persistent storage.

### Reference numeral list

- 10: Data Logging Device
- 12: CU
- 14: primary storage
- 16: data interface
- 18: control unit
- 20: RAM memory
- 22: NAND flash memory
- 24: backup energy source
- 26: read-out interface
- 28: data link
- 30: system memory region
- 32: NVRAM memory region
- 32': NVRAM memory region
- 34: ring-buffer
- 36: persistent memory region
- 38: data switch

## Claims

1. Data Logging Device (10), in particular for AD (Autonomous Driving) or ADAS (Advanced Driver Assistant Systems) applications for vehicles, including a computing unit CU (12) and a primary storage (14) with at least one non-volatile random-access memory (NVRAM) region (32, 32'), wherein:
the CU (12) is configured to collect data, in particular vehicle data,
at least one ring-buffer (34) is implemented in said NVRAM region (32, 32'),
the ring-buffer (34) is configured to store the data, and
the CU (12) and the primary storage (14) are connected by a data interface (16), in particular a data line, and configured to transfer the data from the CU (12) to the ring-buffer (34).

2. The Data Logging Device (10) according to claim 1, wherein the NVRAM region (32, 32') includes a persistent memory region (36) different from the ring-buffer (34) for persistent storage of a data content of the ring-buffer (34) in case of a trigger event.

3. The Data Logging Device (10) according to claim 2, wherein the NVRAM region (32, 32') is configured to store multiple persistent images of the ring-buffer (34).

4. The Data Logging Device (10) according to claim 2 or 3, wherein the trigger event corresponds to an occurrence of deviations in the data or irregularities in the data or specific patterns in the data or other events.

5. The Data Logging Device (10) according to any one of claims 2 to 4, wherein the Data Logging Device (10) further includes an interface (26) configured to allow for a read-out of the persistently stored data.

6. The Data Logging Device (10) according to any one of claims 1 to 5, wherein the ring-buffer (34) is mounted as a memory drive to the CU (12).

7. The Data Logging Device (10) according to any one of the claims 1 to 6, wherein the primary storage (14) including the NVRAM region (32, 32') is an implementation of non-volatile dual inline memory (NVDIMM-N) technology and includes a control unit (18), a volatile RAM memory (20), a non-volatile flash memory (22) and an energy source (24).

8. The Data Logging Device (10) according to claim 7, wherein the control unit (22) is configured to control the primary storage (14), at least a part of the volatile RAM memory (20) is configured to store the data transferred from the CU (12) in the ring-buffer (34), and the non-volatile flash memory unit (22) is configured to retrieve and store the data stored in the ring-buffer (34) in case of the trigger event.

9. The Data Logging Device (10) according to claim 7 or 8, wherein a memory size of the non-volatile flash memory (22) is equal to or multiple times larger than a memory size of the ring-buffer (34).

10. The Data Logging Device (10) according to any one of claims 1 to 6, wherein the NVRAM region (32, 32') is realized with a NVDIMM-P module or a Data Center Persistent Memory Module (DCPMM) or a Ferroelectric Random Access Memory (FeRAM) module or a Magnetoresistive Random Access Memory (MRAM) module or a Phase-change Random Access Memory (PCRAM) module or a Nanotube-based Random Access Memory (NRAM) module.

11. The Data Logging Device (10) according to any one of claims 1 to 10, wherein the primary storage (14) and/or the at least one NVRAM region (32, 32') is a Dual Inline Memory Module (DIMM) or a M.2 module or a Next Generation Form Factor (NGFF) module.

12. A method for operating a Data Logging Device (10) according to any one of claims 1 to 11, comprising the steps of:
transferring data collected by the CU (12) to the primary storage (14) via the data interface (16), in particular a data line, and
storing the data in the ring-buffer (34).

13. The method according to claim 12, further comprising the step of:
in case of a trigger event, persistently storing a data content of the ring-buffer (34) in a persistent memory region (36) within the NVRAM region (32, 32'), wherein the persistent memory region (36) is different from the ring-buffer (34).

14. The method according to claim 13, wherein multiple persistent images of the ring-buffer (34) are stored in said persistent memory region (36).

15. The method according to any one of claims 12 to 14, wherein a memory size of the ring-buffer (34) corresponds to a memory size of data collected during a time span of 1 minute or less.
